# EUROPÄISCHE PATENTANMELDUNG

(11) **EP 2 937 748 A1**
(43) Veröffentlichungstag der Anmeldung: **28.10.2015**
(21) Anmeldenummer: 14166129.8
(22) Anmeldetag: 28.04.2014
(51) Int. Cl.: G05B 15/02, G08C 17/02

(54) **Verfahren zur selektiven Ansteuerung elektrischer Geräte**

(30) Priorität: 28.03.2014 EP 14162468
(71) Anmelder: Mivune AG, 8952 Schlieren (CH)
(72) Erfinder: Marti, Livio, 8953 Dietikon (CH)
(74) Vertreter: Hepp Wenger Ryffel AG

(57) **Zusammenfassung**

Die Erfindung betrifft die Gebäudeautomation, insbesondere ein Verfahren zur selektiven Ansteuerung von elektrischen Geräten in einem Raum. In einer besonders bevorzugten Ausführungsform wird ein Mobiltelefon verwendet, das mit Sensoren ausgerüstet ist, welche die relative Ausrichtung des Mobiltelefons zu in dem Raum befindlichen elektrischen Geräten bestimmbar machen. Unter Bezugnahme auf die bekannten Positionen der elektrischen Geräte im Raum kann aufgrund der relativen Ausrichtung des Mobiltelefons eine besonders intuitive und selektive Bedienbarkeit einzelner Geräte erzielt werden.

## Beschreibung

Die vorliegende Erfindung betrifft das Gebiet der Gebäudeautomation, insbesondere die selektive Ansteuerbarkeit von elektrischen Geräten in einer mit einem Gebäudeautomationssystem ausgestatteten Einrichtung.

Als Gebäudeautomation bezeichnet man die Gesamtheit von Überwachungs-, Steuer-, Regel- und Optimierungseinrichtungen in Gebäuden. Die Gebäudeautomation soll es ermöglichen, Funktionsabläufe gewerkeübergreifend selbstständig (automatisch), nach vorgegebenen Einstellwerten (Parametern) durchzuführen oder deren Bedienung bzw. Überwachung zu vereinfachen. Alle Sensoren, Aktoren, Bedienelemente, Verbraucher und andere technische Einheiten im Gebäude werden miteinander vernetzt. Abläufe können in Szenarien zusammengefasst werden.

Gebäudeautomationssysteme sind mittlerweile in grosser Vielzahl bekannt. In Gebäudeautomationssystemen wird neben klassischen Tastern über Visualisierungen (Bedien-Panele, Touch-Screens von mobilen Geräten) die Steuerung der Geräte im Gebäude vorgenommen. Hierbei treten häufig Probleme auf. Der Benutzer muss sich auf die Visualisierung einlassen und konzentrieren, um die korrekten Geräte im Gebäude zu bedienen. Eine Rückmeldung, ob die Ansteuerung geklappt hat, muss jedoch meist durch Prüfen der Geräte erfolgen (z.B. das Prüfen, ob eine Leuchte tatsächlich eingeschaltet ist). Hierzu muss dann häufig ein Ortswechsel vorgenommen werden. Meistens wollen Benutzer Geräte dort steuern, wo sie sich selber gerade befinden. Hierbei ist es häufig umständlich, wenn man in der Visualisierung zuerst den eigenen Standort selektieren muss. Es können leicht Fehlmanipulationen auftreten (z.B., wenn auf einem Grundrissplan zwar die richtige Lage des Zimmers gewählt wird, jedoch das falsche Stockwerk; oder der Benutzer geht von einer falschen Orientierung aus, da bspw. die Himmelsrichtungen falsch vermutet werden). Auch die Ergonomie der grafischen Darstellung ist häufig entscheidend für die Bedienung. Vor allem bei grösseren Gebäuden ist es notwendig, eine Vorauswahl zu treffen, welche Geräte in welchem Bereich man bedienen will, da sonst die Anzahl der Geräte nicht mehr darstellbar ist.

Die Bedienung ist trotz erheblichen Fortschritten in der Gestaltung von Benutzeroberflächen (GUI) oftmals noch wenig intuitiv. Auch die Fernbedienung von Gebäudeautomationssystemen ist zwar an sich bekannt und kann beispielsweise mit Mobiltelefonen erfolgen. Derartige Fernbedienungen sind jedoch bis anhin, soweit ersichtlich, ebenfalls noch wenig intuitiv. Der Benutzer ist mit seiner Aufmerksamkeit auf das Mobiltelefon fixiert, um bspw. auf einem berührungsempfindlichen Bildschirm diejenigen Eingaben vorzunehmen, die nötig sind, um ein elektrisches Gerät auszuwählen und anzusteuern.

Es ist daher eine Aufgabe der vorliegenden Erfindung, die Bedienung von Gebäudeautomationssystemen und/oder die Steuerung elektrischer Geräte zu vereinfachen. Diese Aufgabe wird gelöst durch die Merkmale der unabhängigen Patentansprüche; vorteilhafte Ausführungsformen sind in den Unteransprüchen dargelegt.

Ein erster Aspekt der Erfindung betrifft ein Verfahren zum Einrichten einer selektiven Ansteuerbarkeit von elektrischen Geräten in einem Raum, umfassend die folgenden Schritte:
i. Bereitstellung einer Datenbank, in der Positionsdaten elektrischer Geräte abgelegt sind oder ablegbar sind.

Derartige Positionsdaten elektrischer Geräte sind typischerweise in einem bestehenden Gebäudeautomationssystem ohnehin hinterlegt. Typischerweise handelt es sich dabei um x/y/z-Koordinaten. Grundsätzlich kann ein beliebiger, jedoch für alle elektrischen Geräte einheitlicher Null-Punkt des Koordinaten-Systems gewählt werden. In der Datenbank sind vorteilhaft bei allen Geräten deren Koordinaten, sowie insbesondere deren Bedienmöglichkeiten hinterlegt (z.B. eine Leuchte ist ein-/ausschaltbar; dimmbar. Eine Klimaanlage ist ein-/ausschaltbar, kann mehr oder weniger kühlen, etc.). Diese Bedienmöglichkeiten können dann dem Bediener über das Computerprogrammprodukt als Steuerelemente angeboten werden, wie nachfolgend noch erläutert wird.
ii. Bereitstellung eines Computerprogrammprodukts, das, wenn es auf einem Computer ausgeführt wird,
a1) die zumindest näherungsweise, absolute Position des Computers im Raum bestimmen kann, und/oder
a2) die Eingabe und/oder Auswahl einer zumindest näherungsweisen, absoluten Position im Raum durch den Benutzer ermöglicht;

Wesentlich ist, dass der Bedienstandort im Gebäude identifiziert ist. Dies kann gemäss Schritt a1) durch eine im Wesentlichen automatisierte Innenraumlokalisierung erfolgen. Besonders geeignet sind hierfür das iBeacon® System oder auch Near Field Communication. Derartige Systeme ermöglichen es, den jeweils aktuellen Bedienstandort mit Referenzpunkten abzugleichen und somit zumindest näherungsweise die absolute Position des aktuellen Bedienstandorts zu ermitteln.

Unter "absoluter Position" wird hier und im Weiteren eine Angabe verstanden, die es ermöglicht, die Position eines Objekts im Raum im Wesentlichen eindeutig zu definieren. Eine Aussage über die relative Ausrichtung des Objekts an dieser Position relativ zu anderen Objekten im Raum muss diese Angabe nicht beinhalten und beinhaltet sie typischerweise auch nicht.

Alternativ oder ergänzend zu Schritt a1) kann gemäss Schritt a2) der Bedienstandort auch vom Benutzer manuell eingegeben oder aus einer Auswahl ausgewählt werden. Die Position im Raum kann alternativ, jedoch weniger bevorzugt, gemäss Schritt a2) auch dadurch ausgewählt werden, dass das Computerprogrammprodukt auf einem ortsgebundenen Computer läuft oder nur ortsgebunden bedienbar ist (bspw. mit einer Kabelanbindung in einer Sessellehne, wie bspw. aus Flugzeugsitzen an sich bekannt).

Das Computerprogrammprodukt vermag weiter, wenn es auf einem Computer ausgeführt wird, gemäss Schritt
b) eine insbesondere kabellose Kommunikation mit einem Gebäudeautomationssystem, über welches die elektrischen Geräte angesteuert werden können, einzugehen.

Für eine derartige Kommunikation sind besonders bevorzugt WLAN Verbindungen geeignet. Moderne Gebäudeautomationssysteme weisen für derartige Kommunikation ohnehin bereits eine offene Schnittstelle auf (bspw. TCP/IP), sodass eine Anbindung an bestehende Systeme (zum Empfang / Absetzen von Steuersignalen) problemlos möglich ist. Kabelverbindungen sind jedoch insbesondere bei ortsgebundenen Systemen, wie vorstehend beschrieben, ebenfalls möglich. Zwar ist die Erfindung bevorzugt im Rahmen eines Gebäudeautomationssystems bevorzugt und besonders vorteilhaft einsetzbar. Grundsätzlich kommt aber selbstverständlich der Einsatz der Erfindung bei jeglicher Steuerung elektrischer Geräte in Betracht. Wenn im Rahmen der Erfindung somit auf eine Gebäudeautomation bzw. ein Gebäudeautomationssystem Bezug genommen wird, so wird hierunter im weiteren Sinne ein System zur Steuerung elektrischer Geräte vestanden; im engeren Sinne ein Gebäudeautomationssystem.

Das Computerprogrammprodukt vermag weiter, wenn es auf einem Computer (insbesondere einem Mobiltelefon, einem Tablet-Computer oder einem Laptop) ausgeführt wird, gemäss Schritt
c1) aufgrund der Ausrichtung des Computers an seiner absoluten Position im Raum relativ zu den elektrischen Geräten diese selektiv über das Gebäudeautomationssystem ansteuern kann; und/oder
c2) in einer Live-Bilddarstellung des Raums (auch als sogenannte "Augmented Reality" (AR) bekannt) die darin vorhandenen elektrischen Geräte selektiv vom Benutzer anwählbar darstellt und ein angewähltes elektrisches Gerät selektiv über das Gebäudeautomationssystem ansteuerbar ist.

Die Variante gemäss Schritt c1) ist besonders bevorzugt. Sie ermöglicht es dem Benutzer, sich im Wesentlichen vollständig vom Bildschirm des Computers zu lösen und stattdessen lediglich den Computer bspw. per Hand auf das zu steuernde elektrische Gerät auszurichten. Es versteht sich, dass daher sogenannte "handheld" Geräte besonders bevorzugt im Rahmen der Erfindung Verwendung finden (insbesondere also Mobiltelefone, Tablet-Computer oder auch spezielle Bediengeräte, die im Wesentlichen wie eine klassische Fernbedienung handhabbar sind und auf die Verwendung im Rahmen der Erfindung angepasst sind. Das ermöglicht eine wesentlich intuitivere, beinahe blinde Steuerung von elektrischen Geräten. Wie aufgrund der Ausrichtung des Computers an seiner absoluten Position im Raum relativ zu einem elektrischen Geräte dieses selektiv über das Gebäudeautomationssystem angesteuert werden kann, wird nachfolgend noch im Detail beschrieben.

In besonders bevorzugten Ausführungsformen können ergänzend Funkkommunikationsmittel bereitgestellt werden, mit welchen das Computerprogrammprodukt kommunizieren kann. Diese Funkkommunikationsmittel können im Raum bzw. den Räumen verteilt werden und dienen der Ermöglichung einer verbesserten Innenraum-Lokalisierung. Die zumindest näherungsweise Bestimmung der absoluten Position des Computers im Raum in Schritt a1) kann somit per Funktechnik erfolgen, vorzugsweise mittels Bluetooth®, insbesondere Bluetooth® 4.0 oder neuer; oder mittels Near Field Communication. Es können bspw. iBeacons® oder auch RFIDs (für Near Field Communication) eingesetzt werden. Der von Apple im Jahre 2013 eingeführte, proprietäre Standard iBeacon® basiert auf Bluetooth Low Energy (BLE). Hierbei werden im Raum kleine Sender (Beacons) als Signalgeber platziert, die in festen Zeitintervallen Signale senden. Kommt ein Empfänger - z. B. ein Computer, insbesondere ein Smartphone - in die Reichweite eines Senders, kann die UUID des Senders identifiziert und seine Signalstärke gemessen werden. Sind mehrere Beacons in Reichweite des Smartphones, lässt sich durch Trilateration die Position des Empfängers im Raum errechnen. iBeacon-Module erreichen eine Reichweite von bis zu 30 Metern und zeichnen sich durch einen geringen Stromverbrauch aus, was sie im Rahmen der vorliegenden Erfindung besonders geeignet macht.

In weiteren Ausführungsformen der Erfindung kann die Datenbank für die Positionsdaten der elektrischen Geräte in dem Computerprogrammprodukt integriert sein. Selbstverständlich ist es im Rahmen der Erfindung aber ebenfalls möglich, dass das Computerprogrammprodukt auf die in dem Gebäudeautomationssystem hinterlegten Daten zugreift und diese verwendet, ohne dass in dem Computerprogrammprodukt selbst eine diesbezügliche Datenbank angelegt ist. Gleiches gilt für die möglichen Bedienstandorte, wie vorstehend erläutert.

In besonders bevorzugten Ausführungsformen, wie vorstehend erläutert, erfolgt die Ansteuerung eines elektrischen Geräts basierend auf der Ausrichtung des Computers an seiner absoluten Position relativ zu diesem elektrischen Gerät. Derartige Ausführungsformen erfordern typischerweise Sensoren, die ausgewählt sind aus der Gruppe bestehend aus Neigungssensoren (bspw. einem Gyroskop) und Kompassen. Besonders bevorzugt sind beide Gattungen von Sensoren vorhanden. Derartige Sensoren sind besonders bevorzugt in dem Computer integriert, können aber auch lediglich mit dem Computer wirkverbunden sein. Insbesondere moderne Mobiltelefone wie bspw. das iPhone® 5S weisen derartige Sensoren auf, die unmittelbar im Rahmen der vorliegenden Erfindung nutzbar sind.

Ein weiterer Aspekt der Erfindung betrifft ein Verfahren zur selektiven Ansteuerung von elektrischen Geräten in einem Raum, umfassend die Schritte:
i. Einrichten einer selektiven Ansteuerbarkeit von elektrischen Geräten in einem Raum gemäss einem Verfahren wie vorstehend beschrieben;
ii. Auswahl des anzusteuernden elektrischen Geräts im Raum derart, dass
   a1) der Benutzer den Computer an seiner absoluten Position im Raum relativ zu einem auszuwählenden elektrischen Gerät ausrichtet, und/oder
   a2) der Benutzer in einer Live-Bilddarstellung des Raums ein elektrisches Gerät auswählt;
wobei der Benutzer für die Auswahl des anzusteuernden elektrischen Geräts ggf. eine weitere Aktion durchführen, insbesondere eine angezeigte Auswahl bestätigen oder eine Auswahl aus mehreren Möglichkeiten treffen muss.

Wie vorstehend bereits beschrieben ist es im Rahmen der Erfindung besonders bevorzugt, dass die Auswahl des anzusteuernden elektrischen Geräts gemäss Schritt a1) erfolgt, da dies eine besonders intuitive Art der Bedienung darstellt.

Die ggf. weitere Aktion des Benutzers, die nötig ist, um das anzusteuernde Gerät auszuwählen, kann bspw. eine Berührung des Bildschirms sein. Die Auswahl kann aber insbesondere bei modernen Smartphones besonders vorteilhaft bspw. auch durch eine Handbewegung wie bspw. Schütteln, das Drücken eines leicht ertastbaren Knopfes wie bspw. des Auslösers für eine eingebaute Kamera, oder auch per Sprachsteuerung erfolgen.

Die Ansteuerung des elektrischen Geräts im Raum erfolgt schliesslich derart, dass das Computerprogrammprodukt und der Computer insbesondere kabellos Daten an das Gebäudeautomationssystem überträgt, wobei die Daten eine Ansteuerung des mittels des Computers ausgewählten elektrischen Geräts über das Gebäudeautomationssystem gemäss Benutzereingaben auf/an dem Computer bewirken. Den Steuerungsmöglichkeiten sind hierbei im Grundsatz keine weiteren Grenzen gesetzt als diejenigen, die durch das Gebäudeautomationssystem selbst vorgegeben sind. Typische Steuerungsmöglichkeiten sind bspw. "An/Aus", Dimmen, Einstellen von Farben; Betätigen von Reglern und Motoren; etc.

Ein weiterer Aspekt der Erfindung betrifft die Verwendung eines Computers, der Elemente ausgewählt aus den folgenden Gruppen aufweist
i. Funkkommunikationsmittel, vorzugsweise Bluetooth®, insbesondere Bluetooth® 4.0 oder neuer; Kommunikationsmittel für Near Field Communication; sowie Kombinationen davon;
ii. Wireless Local Area Network Kommunikationsmittel;
iii. Mittel zur Bestimmung der Ausrichtung des Computers im Raum, insbesondere Neigungssensor(en) (bspw. Gyroskop(en)); Beschleunigungssensor(en); Kompass(e); sowie Kombinationen davon;
iv. Berührungsempfindlicher Bildschirm;
v. Kamerasystem mit Live-Bildvorschau;
oder mit solchen Elementen wirkverbunden ist, als Steuerungsmittel in einem Gebäudeautomationssystem, welches das selektive Anwählen von elektrischen Geräten in einem Raum durch den Benutzer
- aufgrund der Ausrichtung des Computers durch den Benutzer an seiner absoluten Position im Raum relativ zu den elektrischen Geräten; und/oder
- aufgrund der Auswahl eines elektrischen Geräts durch den Benutzer in einer Live-Bilddarstellung des Raums mit den in dem Bildausschnitt vorhandenen elektrischen Geräten.

Bei diesem Computer handelt es sich nicht um den eigentlichen Steuerungsrechner des Gebäudeautomationssystems, sondern um einen separaten Computer, der insbesondere über kabellose Kommunikationsmittel (bspw. WLAN) Daten an das Gebäudeautomationssystem senden kann. Besonders bevorzugt handelt es sich bei dem Computer um ein Mobiltelefon oder einen Tablet-Computer.

Ein weiterer Aspekt der Erfindung betrifft das bereits beschriebene Computerprogrammprodukt, das, wenn es auf einem Computer ausgeführt wird,
a1) die zumindest näherungsweise, absolute Position des Computers im Raum bestimmen kann, und/oder
a2) die Eingabe und/oder Auswahl einer zumindest näherungsweisen, absoluten Position im Raum durch den Benutzer ermöglicht;
b) eine insbesondere kabellose Kommunikation mit einem Gebäudeautomationssystem eingehen kann, über welches die elektrischen Geräte angesteuert werden können;
c1) aufgrund der Ausrichtung des Computers an seiner absoluten Position im Raum relativ zu den elektrischen Geräten diese selektiv über das Gebäudeautomationssystem ansteuern kann; und/oder
c2) in einer Live-Bilddarstellung des Raums die darin vorhandenen elektrischen Geräte selektiv vom Benutzer anwählbar darstellt und ein angewähltes elektrisches Gerät selektiv über das Gebäudeautomationssystem ansteuerbar ist.

Ein weiterer Aspekt der Erfindung betrifft ein Gebäudeautomationssystem, umfassend ein Computerprogrammprodukt wie vorstehend beschrieben.

Ein letzter Aspekt der Erfindung betrifft ein Verfahren zum Aufrüsten eines Gebäudeautomationssystems, umfassend das Einrichten einer selektiven Ansteuerbarkeit von elektrischen Geräten in einem Raum gemäss einem Verfahren wie eingangs beschrieben. Ein besonderer Vorteil der Erfindung ist, dass handelsübliche Gebäudeautomationssysteme ohne Weiteres damit aufgerüstet werden können. Es ist lediglich eine offene Schnittstelle (bspw. TCP/IP) nötig zum Absetzen / Empfangen von Steuersignalen und ggf. - für die besonders bevorzugten, kabellosen Varianten bspw. mit einem Smartphone oder einem Tablet-Computer - drahtlose Kommunikationsmittel wie bspw. WLAN Verbindungsmittel.

Aus vorstehender Beschreibung der Erfindung erschliessen sich dem Fachmann vielerlei Vorteile. Dem Benutzer wird gewissermassen eine "Fernbedienung" zur Verfügung gestellt, wie er sie in Art und Verwendung von anderen elektrischen Geräten wie bspw. Fernsehern kennt. Durch Ausrichten ("Zielen") auf das elektrische Gerät kann es ausgewählt und angesteuert werden. Dass als eine solche "Fernbedienung" für das Gebäude dem Benutzer sein ohnehin häufig stets präsentes Smartphone dienen kann, macht die Erfindung besonders attraktiv und nützlich. Die Bedienung wird überaus intuitiv: Der Fokus der Bedienung liegt nicht mehr auf den Bediengeräten, sondern auf den elektrischen Geräten, die angesteuert werden sollen bzw. auf dem Raumbereich, in dem sich der Benutzer befindet; alles andere ist nicht relevant und kann daher auch nicht fehl-manipuliert werden.

Eine Fülle von Anwendungen sind durch die Erfindung ermöglicht, die bis anhin nur schwer realisierbar oder unmöglich zu realisieren waren:
i. Applizieren von Einstellungen auf andere Geräte:
   Durch Anpeilen eines Gerätes kann dieses bedient werden, wie vorstehend beschrieben. Wird nun bei der auf dem Bediencomputer ("Fernbedienung") beispielsweise ein spezieller "Clone"-Knopf gedrückt, so kann diese Einstellungen auf alle Geräte, die im Folgenden angepeilt werden, übertragen werden. So kann bspw. die Klimaanlage auf Standby gesetzt werden; man drückt anschliessend auf den "Clone"-Knopf und zielt auf die Geräte, die ebenfalls auf Standby gesetzt werden sollen (Computer, Fernseher, etc.).
ii. (Halb-)automatische Inbetriebnahme eines Gebäudes:
   Üblicherweise sind bei der Erstellung eines Gebäudes Pläne mit allen Koordinaten der verbauten Geräte vorhanden. Trotzdem ist es für die Techniker/Integratoren sehr aufwändig, die verbauten Geräte an die Gebäude-Automation anzuschliessen, da die Geräte noch korrekt adressiert werden müssen. Aufgrund der Erfindung kann dies fast vollständig automatisiert werden. Man peilt das Gerät, das in Betrieb genommen werden soll, bspw. mit dem Smartphone an, auf dem das vorstehend beschriebene Computerprogrammprodukt läuft. Da das Gerät im GebäudeAutomationssystem noch nicht adressiert ist, kann es das Smartphone auch noch nicht selektiv ansteuern. Doch es kann iterativ alle nichtadressierten/zugeordneten Geräte einzeln ansteuern. Sobald das angepeilte Gerät anspricht, kann dieses Gerät als adressiert ins GebäudeautomationsSystem aufgenommen werden. Bei Leuchten kann dieser Vorgang sogar bei Einsatz von Bildverarbeitung automatisch ablaufen: Sobald an der gewünschten Koordinate Licht erscheint, war es das gewünschte Gerät.
iii. "Spotlight":
   Dasjenige Gerät (oder eine Untergruppe von Geräten wie bspw. Lampen), das bspw. mit dem Smartphone, auf dem das vorstehend beschriebene Computerprogrammprodukt läuft, angepeilt wird, kann sich automatisch bemerkbar machen, alle anderen Geräte sollen inaktiv sein. Somit kann beispielsweise ein Nachtwächter nur gerade jenen Bereich aufhellen, wo er mit dem Smartphone hinzeigt. Geht er weiter, wird es automatisch wieder dunkel.
iv. "Personalisierter Präsenz-Sensor":
   Der Benutzer kann sich im Gebäude bewegen und dabei das Smartphone mit darauf laufendem Computerprogrammprodukt, wie vorstehend beschrieben, mit sich führen. In einem "Präsenz-Modus" kann es ermöglicht werden, überall dort, wo sich der Benutzer gerade aufhält, alle oder nur eine Auswahl von Geräten zu aktivieren (Licht, Lüftung, Musik, etc.). Sobald der Benutzer den Raum oder Raumbereich wieder verlässt, schaltet / schalten sich die Geräte wieder aus. Die Aktivierung kann zudem personalisiert erfolgen, wenn das Computerprogrammprodukt diese Information über das Smartphone an das Gebäudeautomationssystem mitschickt. So können unterschiedlich starke Lüftung, Musik, etc. realisiert werden, je nachdem, wer anwesend ist. Bei diesen Ausführungsformen werden nicht mehr nur einzelne Geräte spezifisch angepeilt, sondern ein Raum oder Raumbereich identifiziert, in dem man sich gerade befindet.

Die Erfindung wird nachfolgend anhand von Ausführungsbeispielen und Figuren näher erläutert, ohne dass der Gegenstand der Erfindung auf die gezeigten Ausführungsformen zu beschränken wäre.
Figuren 1a-e: Screenshots der Benutzeroberfläche eines erfindungsgemässen Computerprogrammprodukts, betreffend Einzelheiten zu den Räumen und den darin installierten elektrischen Geräten;
Figuren 2a-c: Screenshots der Benutzeroberfläche eines erfindungsgemässen Computerprogrammprodukts, wie sie sich beim Ausrichten des Computers auf elektrische Geräte im "Pointing" Modus darstellt.;
Figuren 3a-b: Screenshots der Benutzeroberfläche eines erfindungsgemässen Computerprogrammprodukts, wie sie sich beim Ausrichten des Computers auf elektrische Geräte im "AR" (Bild) Modus darstellt; Figur 4: Benutzer beim Bedienen eines Smartphones, auf dem ein erfindungsgemässes Computerprogrammprodukt läuft.

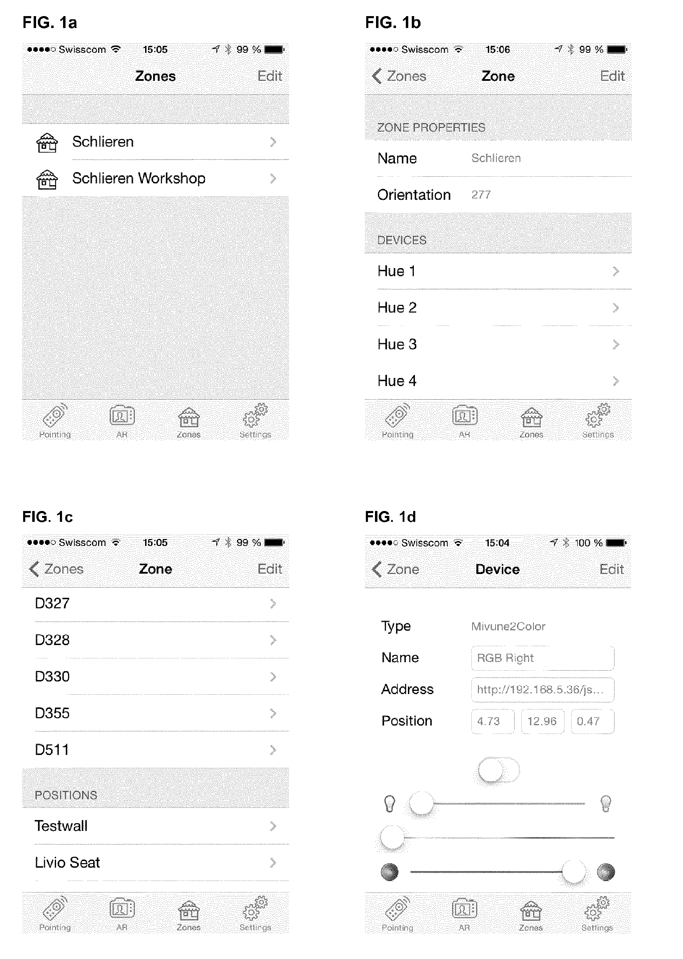

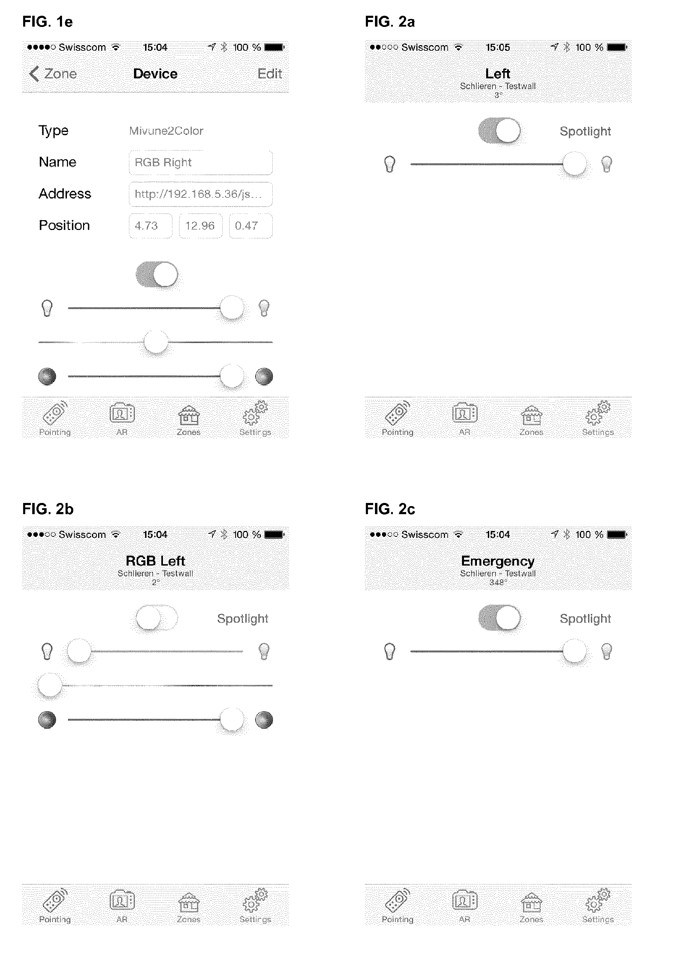

Figuren 1a-e zeigen verschiedene Screenshots der Benutzeroberfläche eines auf einem Smartphone laufenden, erfindungsgemässen Computerprogrammprodukts, betreffend Einzelheiten zu den Räumen und den darin installierten elektrischen Geräten (Menüführung am unteren Bildrand: "Zones"). In Fig. 1a stehen exemplarisch zwei sogenannte Zonen (wie bspw. Gebäudeteile), die in üblicher Art und Weise durch Berührung ausgewählt werden können. Fig. 1a zeigt die Darstellung, die sich beim Auswählen der Zone "Schlieren" in Fig. 1a ergibt. Unter "Zone Properties" werden allgemeine Daten angezeigt. Unter "Devices" sind alle installierten elektrischen Geräte verzeichnet, und unter "Positions" (vergl. Fig. 1c) sind schliesslich alle ggf. vordefinierten Standpunkte in der jeweiligen Zone verzeichnet. Fig. 1d zeigt die Benutzeroberfläche für einzelne Geräte, die in Fig. 1b bzw. Fig. 1c ausgewählt werden können. Für jedes Gerät kann ein "Name", eine "Adresse" (bspw. TCP/IP) sowie die absolute Position im Raum ("Position") hinterlegt sein oder werden. Auch aus diesem Menü kann eine Bedienbarkeit des Geräts vorgesehen sein, wie in Fig. 1d gezeigt. Das Gerät "RGB Right" kann an- und ausgeschaltet werden, die Helligkeit kann eingestellt werden, ebenso wie der Farbton und die Farbintensität (Schieberegler in der Reihenfolge von oben nach unten). Andere Einstellungen der Schieberegler sind in Fig. 1e gezeigt.

Figuren 2a-c zeigen verschiedene Screenshots der Benutzeroberfläche eines auf einem Smartphone laufenden, erfindungsgemässen Computerprogrammprodukts, betreffend die selektive Ansteuerung elektrischer Geräte im aufgrund der Ausrichtung des Computers an seiner absoluten Position im Raum relativ zu den elektrischen Geräten (Menüführung am unteren Bildrand: "Pointing"). Das in Fig. 2a von der Position "Testwall" ausgewählte Gerät trägt den Namen "Left" (siehe Titel) und befindet sich in der Zone "Schlieren" (siehe Titelunterschriften). Das Gerät "Left" lässt sich nun durch einfache Bildschirmberührung an- und ausschalten sowie Dimmen. In Fig. 2b ist in der gleichen Zone und von der gleichen Position das Gerät "RGB Left" ausgewählt. Dieses befindet sich unmittelbar benachbart zu "Left", was aus der nur um ein Grad unterschiedlichen Winkelangabe in der Titelunterschrift ersichtlich ist. Für "RGB Left" sind weitergehende Einstellungsmöglichkeiten vorhanden, wie bereits vorne in Bezug auf Fig. 1d erläutert. In Fig. 2c ist das Gerät "Emergency" ausgewählt. Dabei handelt es sich um eine Warnlampe, die in Notfällen den Weg zum Ausgang weist. Wie in Fig. 2a ist das Gerät an- und ausschaltbar sowie dimmbar.

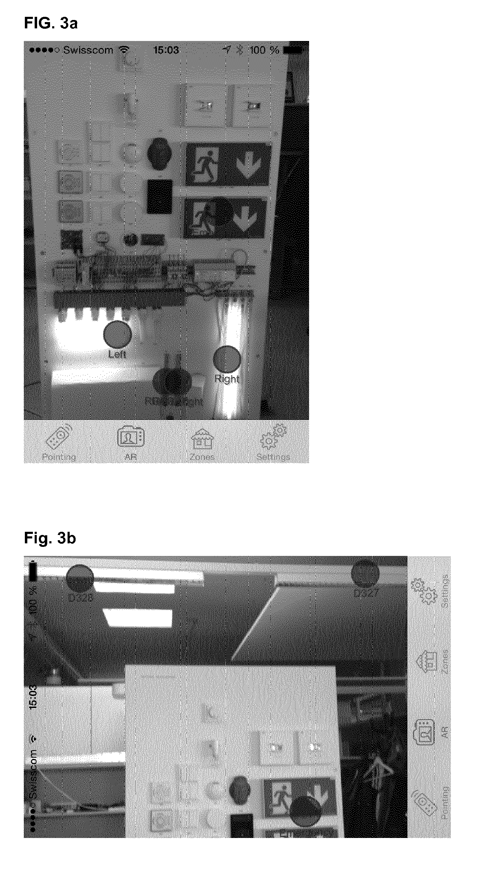

Figuren 3a-b zeigen verschiedene Screenshots der Benutzeroberfläche eines auf einem Smartphone laufenden, erfindungsgemässen Computerprogrammprodukts, betreffend die selektive Ansteuerung elektrischer Geräte im "AR" ("Augmented Reality") Modus (Menüführung am unteren Bildrand: "AR"), wiederum von der von der Position "Testwall" in der Zone "Schlieren". Die im Live-Bildausschnitt vorhandenen Geräte werden aufgrund der hinterlegten Positionsdaten und der Ausrichtung des Smartphones relativ zu den Geräten erkannt und markiert dargestellt. Auch die in den Fig. 2a und 2b dargestellten Geräte "Left" und "RGB Left" sind in Fig. 3a ersichtlich. Sie können nun leicht durch Bildschirmberührung ausgewählt und angesteuert werden. In der Ansicht gemäss Fig. 3b werden neben dem Gerät "Emergency" (vergl. auch Fig. 2c) zwei Deckenleuchten erkannt und sind anwählbar / steuerbar.

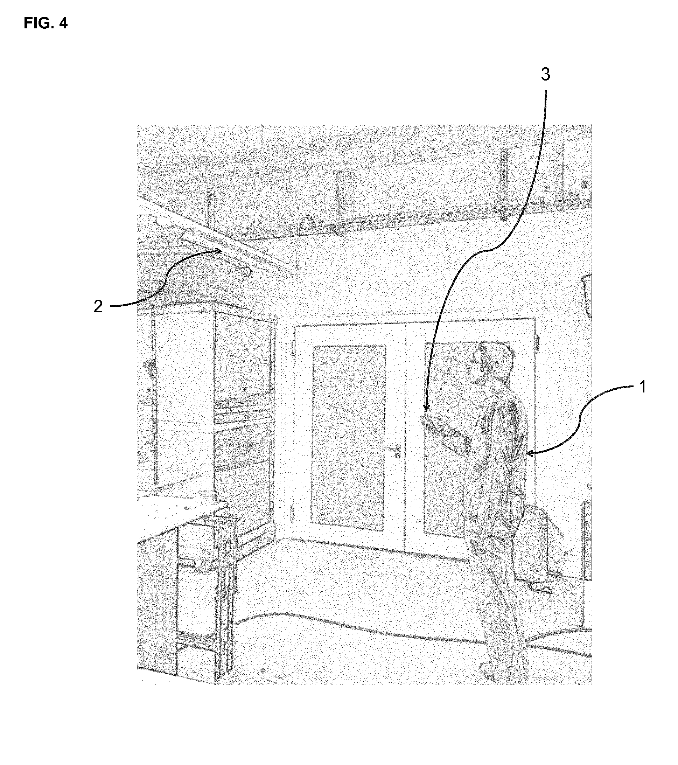

Fig. 4 illustriert die Bedienung die Handhabung eines erfindungsgemässen Computerprogrammprodukts durch einen Benutzer 1 bei der Steuerung eines elektrischen Geräts, hier einer Deckenlampe 2. Der Benutzer hält ein Smartphone 3 in der Hand, auf welchem ein erfindungsgemässes Computerprogrammprodukt läuft. Die Bildschirmdarstellung auf dem Smartphone 3 sieht dann bspw. so aus wie in Fig. 2a dargestellt. Durch simplen Druck auf den berührungssensitiven Bildschirm des Smartphones 3 kann die Deckenlampe 2 ein- und ausgeschaltet und gedimmt werden.

## Patentansprüche

1. Verfahren zum Einrichten einer selektiven Ansteuerbarkeit von elektrischen Geräten in einem Raum, umfassend die folgenden Schritte:
i. Bereitstellung einer Datenbank, in der Positionsdaten elektrischer Geräte abgelegt sind oder ablegbar sind;
ii. Bereitstellung eines Computerprogrammprodukts, das, wenn es auf einem Computer ausgeführt wird,
a1) die zumindest näherungsweise, absolute Position des Computers im Raum bestimmen kann,
und/oder
a2) die Eingabe und/oder Auswahl einer zumindest näherungsweisen, absoluten Position im Raum durch den Benutzer ermöglicht;
b) eine insbesondere kabellose Kommunikation mit einem Gebäudeautomationssystem eingehen kann, über welches die elektrischen Geräte angesteuert werden können;
c1) aufgrund der Ausrichtung des Computers an seiner absoluten Position im Raum relativ zu den elektrischen Geräten diese selektiv über das Gebäudeautomationssystem ansteuern kann;
und/oder
c2) in einer Live-Bilddarstellung des Raums die darin vorhandenen elektrischen Geräte selektiv vom Benutzer anwählbar darstellt und ein angewähltes elektrisches Gerät selektiv über das Gebäudeautomationssystem ansteuerbar ist.

2. Verfahren nach Anspruch 1, wobei Funkkommunikationsmittel im Raum bereitgestellt werden, mit welchen das Computerprogrammprodukt kommunizieren kann.

3. Verfahren nach einem der Ansprüche 1 oder 2, wobei die Datenbank in dem Computerprogrammprodukt integriert ist.

4. Verfahren nach einem der Ansprüche 1 bis 3, wobei die zumindest näherungsweise Bestimmung der absoluten Position des Computers im Raum in Schritt a1) per Funktechnik erfolgt, vorzugsweise mittels Bluetooth®, insbesondere Bluetooth® 4.0 oder neuer; oder mittels Near Field Communication.

5. Verfahren nach einem der Ansprüche 1 bis 4, wobei die Ausrichtung des Computers an seiner absoluten Position im Raum relativ zu einem der elektrischen Geräte mittels Sensoren ermittelt wird, die ausgewählt sind aus der Gruppe bestehend aus Neigungssensoren; Kompassen; sowie Kombinationen davon; und wobei diese(r) Sensor(en) in dem Computer integriert oder mit dem Computer wirkverbunden ist/sind.

6. Verfahren nach einem der Ansprüche 1 bis 5, wobei es sich bei dem Computer um ein Mobiltelefon, einen Tablet-Computer oder ein Laptop handelt.

7. Verfahren zur selektiven Ansteuerung von elektrischen Geräten in einem Raum, umfassend die Schritte:
i. Einrichten einer selektiven Ansteuerbarkeit von elektrischen Geräten in einem Raum gemäss einem Verfahren gemäss einem der Ansprüche 1 bis 6;
ii. Auswahl des anzusteuernden elektrischen Geräts im Raum derart, dass
a1) der Benutzer den Computer an seiner absoluten Position im Raum relativ zu einem auszuwählenden elektrischen Gerät ausrichtet, und/oder
a2) der Benutzer in einer Live-Bilddarstellung des Raums ein elektrisches Gerät auswählt;
wobei der Benutzer für die Auswahl des anzusteuernden elektrischen Geräts ggf. eine weitere Aktion durchführen, insbesondere eine angezeigte Auswahl bestätigen oder eine Auswahl aus mehreren Möglichkeiten treffen muss;
iii. Ansteuerung des elektrischen Geräts im Raum derart, dass das Computerprogrammprodukt und der Computer insbesondere kabellos Daten an das Gebäudeautomationssystem überträgt, wobei die Daten eine Ansteuerung des mittels des Computers ausgewählten elektrischen Geräts über das Gebäudeautomationssystem gemäss Benutzereingaben auf/an dem Computer bewirken.

8. Verwendung eines Computers, der Elemente ausgewählt aus den folgenden Gruppen aufweist
i. Funkkommunikationsmittel, vorzugsweise Bluetooth®, insbesondere Bluetooth® 4.0 oder neuer; Kommunikationsmittel für Near Field Communication; sowie Kombinationen davon;
ii. Wireless Local Area Network Kommunikationsmittel;
iii. Mittel zur Bestimmung der Ausrichtung des Computers im Raum, insbesondere Neigungssensor(en); Kompass(e); sowie Kombinationen davon;
iv. Berührungsempfindlicher Bildschirm;
v. Kamerasystem mit Live-Bildvorschau;
oder mit solchen Elementen wirkverbunden ist, als Steuerungsmittel in einem Gebäudeautomationssystem, welches das selektive Anwählen von elektrischen Geräten in einem Raum durch den Benutzer
- aufgrund der Ausrichtung des Computers durch den Benutzer an seiner absoluten Position im Raum relativ zu den elektrischen Geräten;
und/oder
- aufgrund der Auswahl eines elektrischen Geräts durch den Benutzer in einer Live-Bilddarstellung des Raums mit den in dem Bildausschnitt vorhandenen elektrischen Geräten.

9. Computerprogrammprodukt, das, wenn es auf einem Computer ausgeführt wird,
a1) die zumindest näherungsweise, absolute Position des Computers im Raum bestimmen kann,
und/oder
a2) die Eingabe und/oder Auswahl einer zumindest näherungsweisen, absoluten Position im Raum durch den Benutzer ermöglicht;
b) eine insbesondere kabellose Kommunikation mit einem Gebäudeautomationssystem eingehen kann, über welches die elektrischen Geräte angesteuert werden können;
c1) aufgrund der Ausrichtung des Computers an seiner absoluten Position im Raum relativ zu den elektrischen Geräten diese selektiv über das Gebäudeautomationssystem ansteuern kann;
und/oder
c2) in einer Live-Bilddarstellung des Raums die darin vorhandenen elektrischen Geräte selektiv vom Benutzer anwählbar darstellt und ein angewähltes elektrisches Gerät selektiv über das Gebäudeautomationssystem ansteuerbar ist.

10. Gebäudeautomationssystem, umfassend ein Computerprogrammprodukt gemäss Anspruch 9.

11. Verfahren zum Aufrüsten eines Gebäudeautomationssystems, umfassend das Einrichten einer selektiven Ansteuerbarkeit von elektrischen Geräten in einem Raum gemäss einem Verfahren gemäss einem der Ansprüche 1 bis 6.
